# EUROPEAN PATENT SPECIFICATION

(11) **EP 1 430 663 B1**
(45) Date of publication and mention of the grant of the patent: **08.04.2009**
(21) Application number: 02773599.2
(22) Date of filing: 26.09.2002
(51) Int. Cl.: H04L 12/56, H04W 36/08

(54) **APPARATUS AND METHOD FOR HANDOFF IN A WIRELESS NETWORK**
VORRICHTUNG UND VERFAHREN ZUM WEITERREICHEN IN EINEM DRAHTLOSEN NETZWERK
APPAREIL ET PROCEDE DE TRANSFERT DANS UN RESEAU SANS FIL

(30) Priority: 26.09.2001 US 964820
(43) Date of publication of application: 23.06.2004
(73) Proprietor: Intel Corporation, Santa Clara, CA 95052 (US)
(72) Inventor: LEEPER, David, Scottsdale, AZ 85260 (US)
(74) Representative: Dunlop, Hugh Christopher
(86) International application number: PCT/US2002/030594
(87) International publication number: WO 2003/028318

(56) References cited:
- WO-A-01/20940
- "Specification of the Bluetooth System, Specification Volume 1, Wireless Connections made easy, Core, V1.0 B, pages 1, 127-138, chapter 11 Hop Selection" SPECIFICATION OF THE BLUETOOTH SYSTEM, XX, XX, vol. 1, 1 December 1999 (1999-12-01), pages 126-138, XP002212187

## Description

### BACKGROUND

Some communication systems involve two or more master devices that provide communication between a slave device and a network. To reduce the risk of neighboring master devices interfering with each other, the master devices may use different hopping sequences that vary the transmission frequency of the master device over time so that neighboring master devices are likely to be transmitting at a different frequency.

If the slave device is a mobile device, it may be necessary or desirable to transfer responsibility for maintaining communication between the slave and the network to the master device that is the closest to the slave device. However, this may difficult to do if neighboring master devices are transmitting with different hopping sequences. This is further complicated by many of the rules and regulations that govern the operation of communication systems. For example, in a Bluetooth ^{™} network, Federal Communication Commission (FCC) part 15, section 247 specifically prohibits any form of central control to coordinate the hopping sequences used by the various master devices in the network, (note: Bluetooth ^{™} is a registered trademark of Bluetooth SIG, Incorporated.). The rules require that sequences be chosen independently of one another.

US 6,088,591 describes a cellular communication hand-off protocol. According to the protocol, each base station is configured to communicate its own particular hopping sequence to all other base stations via the system backbone. Each station then provides to mobile devices which are registered thereto information regarding the particular hopping sequences employed by other base stations servicing cells into which the mobile device may roam.

WO 01/20940 A1 describes a method for facilitating handover of communication in a BLUEPAC (Bluetooth public access) or other radio communication system. Address and timing information associated with potential target base stations is collected and broadcast to mobile devices during operation of the radio communication system. The information is utilised by the mobile device during handover procedures to facilitate efficient handover of communications to a selected target base.

Reference is also made to "Specification of the Bluetooth System, Specification Volume 1, Wireless Connections made easy, Core, V1.0 B, pages 1, 127-138, chapter 11 Hop Selection" SPECIFICATION OF THE BLUETOOTH SYSTEM, XX, XX, vol. 1, 1 December 1999 (1999-12-01), pages 126-138, XP002212187.

Thus, there is a continuing need for better ways to provide handoff between master devices in communication networks that employ frequency hopping.

### SUMMARY OF THE INVENTION

According to one aspect of the invention, there is provided a method for handoff between master devices which provide communication between a slave device and a network, the method characterised by: polling a first master device with a second master device to determine a hopping sequence of the first master device, wherein polling the first master device includes determining whether the first master device is receiving a signal from the slave device.

According to another aspect of the invention, there is provided a method of transferring communication from a network to a slave device, wherein communication between the network and the slave device is provided by master devices, the method characterised by: notifying a first master device of the hopping sequence of the slave device with a second master device; and polling the first master device to determine if the first master device is receiving a signal from the slave device.

According to another aspect of the invention, there is provided an article characterised by: a storage medium having stored thereon instructions, that, when executed by a computing platform, provide for handoff between master devices which provide communication between a slave device and a network, and that result in: notifying a first master device of a hopping sequence of the slave device with a second master; and polling the first master device to determine if the first master device is receiving a signal from the slave device.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 is a block diagram representation of a communication network in accordance with an embodiment of the present invention;
FIG. 2 is a block diagram representation of a portion of a transmitting device in accordance with an embodiment of the present invention; and
FIG. 3 is a flow chart illustrating a method that may be performed in accordance with an embodiment of the present invention.

It will be appreciated that for simplicity and clarity of illustration, elements illustrated in the figures have not necessarily been drawn to scale. For example, the dimensions of some of the elements are exaggerated relative to other elements for clarity. Further, where considered appropriate, reference numerals have been repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Some portions of the detailed description that follows are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

An algorithm is here, and generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computing device selectively activated or reconfigured by a program stored in the device. Such a program may be stored on a storage medium, such as, but is not limited to, any type of disk including floppy disks, optical disks, CD-ROMs, magnetic-optical disks, read-only memories (ROMs), random access memories (RAMs), electrically programmable read-only memories (EPROMs), electrically erasable and programmable read only memories (EEPROMs), magnetic or optical cards, or any other type of media suitable for storing electronic instructions, and capable of being coupled to a system bus for a computing device.

The processes and displays presented herein are not inherently related to any particular computing device or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the invention as described herein.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

It should be understood that embodiments of the present invention may be used in a variety of applications. Although the present invention is not limited in this respect, the circuits disclosed herein may be used in many apparatuses such as in the transmitters and receivers of a radio system. Radio systems intended to be included within the scope of the present invention include, by way of example only, cellular radiotelephone communication systems, satellite communication systems, two-way radio communication systems, one-way pagers, two-way pagers, personal communication systems (PCS), personal digital assistants (PDA's) and the like. In addition, embodiments of the present invention may be used in accordance with a variety of communication specifications such as Bluetooth ™, Institute of Electrical and Electronics Engineers (IEEE) 802.11, and any system that employees frequency hopping; although it should be understood that the scope of the present invention is not limited to these examples.

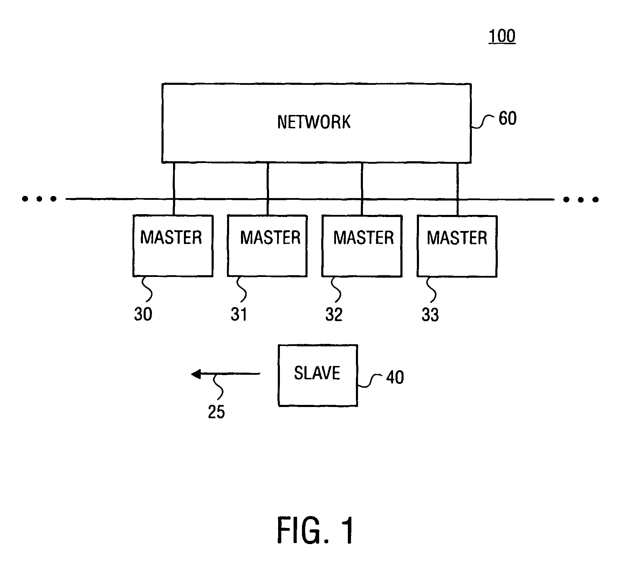

Turning to FIG. 1, an embodiment 100 in accordance with the present invention is described. Embodiment 100 may be a communication system that may include master devices 30-31 to provide communication to or from a slave device 40 and a network 60. Although the scope of the present invention is not limited in this respect, network 60 may be, for example, the internet, an intranet, a local area network (LAN), a wide area network (WAN), a computer, or a peripheral device (e.g. printer, storage device, etc.). Generally speaking, network 60 may be any device, component, or system, with which slave device 40 may be in communication.

As shown in FIG. 1, master devices 30-33 may be connected to each other and to network 60 through any combination or wired or wireless communications. For example, master devices 30-33 may be connect together in a LAN or WAN arrangement. While in operation, one or more of master devices 30-33 may be providing communication between slave 40 and network 60. For example, master devices 30-31 may be any combination of access points, base stations, terminals, servers, network node, etc. Although the scope of the present invention is not limited in this respect, master devices 30-33 may rely on wireless communication to provide information between network 60 and slave 40 allowing slave 40 to be mobile and yet maintain communication with network 60.

In this particular embodiment, it may be desirable that each of master devices transmit on a different frequency to reduce the risk that masters 30-33 interfere with each other. It may also be desirable to have the transmission frequency of masters 30-33 change with time (e.g. frequency hopping) to reduce the risk that the communication interferes with, or encounters interference from neighboring communication sources. Accordingly, master devices 30-33 may be adapted to use a hopping sequence that determines the transmission frequency of each master device 30-33 over time, although the scope of the present invention is not limited in this respect.

To facilitate the mobility of slave 40 while in communication with network 60 it may be desirable that the communication between slave 40 and network 60 be provided with the master device 30-33 that is closest to slave 40 or that is receiving the strongest/clearest signal from slave 40. However, as slave 40 moves, the strength of the communication signal(s) between slave 40 and the master device 30-33 with which it is in communication may change. For example, as shown in FIG. 1, as slave 40 moves in the direction indicated with an arrow 25, it may be desirable to transfer responsibility for the communication between slave 40 and network 60 (i.e. handoff) from master 33, then to master 32, then to master 31, etc. Techniques for performing this are described below.

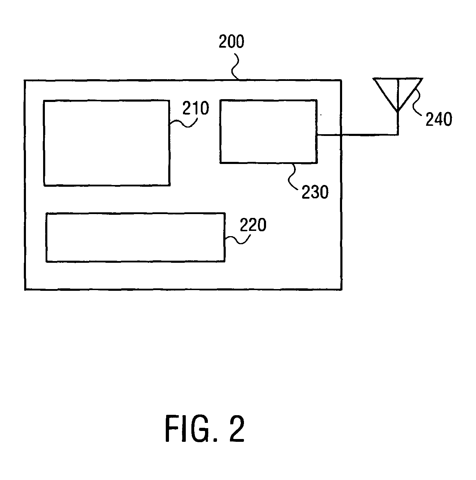

Turning briefly to FIG. 2, an example of a communication device 200 that may be used in accordance with embodiments of the present invention is provided. The block diagram of communication device 200 may represent components of either a master transmitting device (e.g. a master like master devices 30-31), a slave transmitting device (e.g. a slave device like slave device 40), or both. Communication device 200 may include a processor 210 that may be used to execute instructions. For example, the instructions might be used to perform the communication to or from the network, determine if responsibility for maintaining communication should be transferred to another master, or facilitate the transfer of communication responsibility, although the scope of the present invention is not limited in this respect.

The instructions to be executed by processor 210 may be stored in a memory 220. Memory 220 may comprise a variety of memory types such as one or more or those listed above. Communication device 200 may also comprise a transceiver 230 that may be coupled to an antennae 240. Transceiver 230 may allow communication device 200 to perform wireless communication to other devices (e.g. other master or slave devices). Although the scope of the present invention is not limited this respect, communication device 200 may employ a communication protocol such as, for example, Bluetooth ^{™}, IEEE 802.11, etc., to allow communication device 200 to communicate with master devices, slave devices, or a network(s).

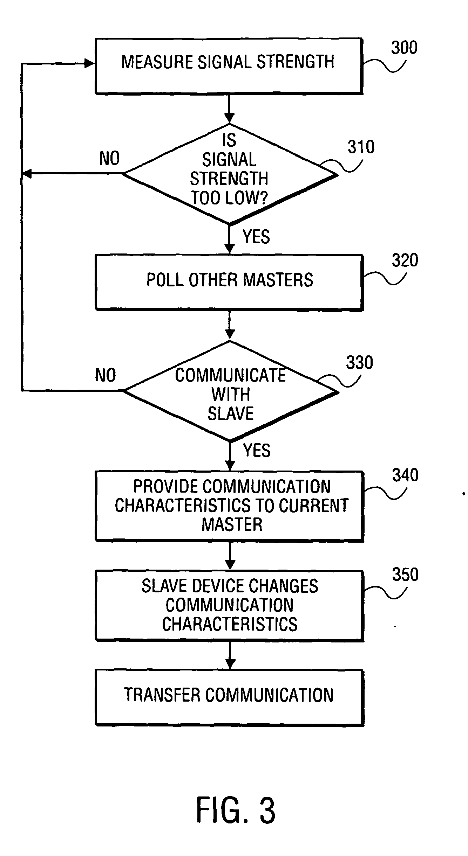

Turning now to FIG. 3, a method for performing a handoff between two masters in accordance with an embodiment of the present invention is provided. In this particular example it is assumed that master device 32 is currently providing communication to and/or from slave 40 and network 60 (see FIG .1). However, as slave device 40 moves, it may be desirable to transfer responsibility for maintaining the communication to other master devices (e.g. master 31 or 33).

This process may begin, for example, with master device 32 monitoring the strength of the communication signal(s) between master device 32 and slave 40, block 300. Although the scope of the present invention is not limited in this respect, if communication system 100 is a Bluetooth ^{™} network, master device 32 may use its receive strength signal indicator (RSSI) capability. Alternatively, master device 32 may track the strength of the communication signal(s) from slave 40 real-time or periodically to monitor the movement of slave 40 with respect to master device 32.

If the master 32 is on the verge of loosing communication with slave 40 (e.g. the strength of the received signal is becoming too weak), then master device 32 may sense the degraded communication (block 310) as part of a process for transferring communication responsibility, block 310. For example, master device 32 may be programmed with an acceptable range or a predetermined threshold (e.g. minimum) of acceptable signal strength or maximum bit error rate for normal operation. It should be noted that this range or threshold may vary depending perhaps on the performance desired for communication system 100 or the characteristics of the master or slave devices in the system. Alternatively, slave device 40 may inform master 32 that the strength of the communication signal(s) it is receiving from master 32 is approaching a predetermined threshold. Thus, before communication is lost, responsibility for maintaining communication between slave device 40 and network 60 may be transferred to another master device (e.g. master device 31 or 33).

Master device 32 may then poll the other master devices in communication network 100 to determine if one of the other master devices can communicate with slave device 40, block 320. If one of the other master devices (e.g. master device 31 or 33) can communicate better with slave device 40, it may be appropriate to transfer the communication. Although the scope of the present invention is not limited in this respect, master 32 may, facilitate determination of communication quality with slave 40 by sending a packet across communication network 100 informing the other master devices (e.g. master 30, 31, and 33) of the communication characteristics of slave device 40. For example, master 32 may notify the other master devices of the hopping sequence, time slot identification information, timing information, identification codes, etc. relevant for receiving signals from slave device 40. Alternatively, master 32 may provide the other master devices with its own communication characteristics so that the other master devices may more closely emulate the operation of master 32.

However, it should be understood that the scope of the present invention is not limited to embodiments where all or only this information is communicated to the other master devices. Likewise the scope of the invention is not limited to embodiments where the master device communicates through wired connections (e.g. a local area network). In alternative embodiments, the communication characteristics may be provided to the other master device through a wireless communication or a combination of wired and wireless communications.

Master devices 30, 31, and 33 may then use the communication characteristics provided by network 60 or master device 32 to determine if they are able to communicate with slave device 40, block 330. For example, master devices 30, 31, and 33 may use an auxiliary receiver to determine the relative strength of, or bit error rate present on, the communication signal(s) received from slave 40 using all or some of the communication characteristics, although the scope of the present invention is not limited in this respect. In alternative embodiments, master devices 30, 31, and 33 may alter their own communication characteristics (e.g. hopping sequence, time slot, etc.) and then determine if they are receiving a communication signal(s) from slave device 40 that is of an acceptable level.

If any of master devices 30, 31, or 33 are able to communicate with slave device 40, they may inform network 60 or master device 32 that responsibility to maintain the communication with slave 40 may be transferred to them. If so, the master device (e.g. master 30, 31, or 33) that is able to communicate with slave device 40 may notify master 32 of its particular communication characteristics, block 340. For example, master 30, 31, or 33 may inform master 32 of its hopping sequence, time slot identification information, timing information, identification codes, etc., or any information relevant for communicating with slave device 40, although the scope of the present invention is not limited in this respect. Alternatively, master devices 30, 31, or 33 may alter is transmission characteristics so that it is able to communicate with slave device 40, if permitted.

Master device 32 may then inform slave device 40 of the communication characteristics of master device 30, 31, or 33 as a way of notifying that slave device 40 should begin communicating with network 60 through a different master device. Slave device 40 may then alter its communication characteristics so that it is able to communication with the new master device (e.g. master device 30, 31, or 33), block 350. With this information, responsibility for providing communication between network 60 and slave device 40 may be transferred to a master device that is able to receive signal(s) from slave 40 despite its movement.

Thus, slave 40 may be provided with the communication characteristics (e.g. hopping sequence) of another master transmitting device so that slave device 40 may be able to maintain communication with network 60. It should be noted that the particular embodiment shown in FIG. 3 is able to provide for the handoff of a slave device between different master devices without the use of a central control unit. Although the scope of the present invention is not limited to exclude a central control unit, it should be noted that such an embodiment complies with many of the rules and regulations governing wireless communication networks.

While certain features of the invention have been illustrated and described herein, many modifications, substitutions, changes, and equivalents will now occur to those skilled in the art. For example, in alternative embodiments, network 60 or communication system 100 may maintain a table of nearest neighbors that is periodically updated to indicate the relative ability of other master transmitting devices to communicate with the slave device. Such an embodiment may be desirable to reduce the amount of time or processing power of the master devices that is used to determine to which other master device should be used to communicate with the slave device.

In addition, the scope of the present invention is not limited to embodiments where the slave device is moving. In alternative embodiments it may be desirable to transfer responsibility for maintaining communication with a slave device to other master devices for such reasons as power consumption, noise, interference, traffic load balancing, etc. It is, therefore, to be understood that the appended claims are intended to cover all such modifications and changes as fall within the scope of the invention.

## Claims

1. A method for handoff between master devices (30-33) which provide communication between a slave device (40) and a network (60), the method
**characterised by**:
polling (320) a first master device with a second master device to determine a hopping sequence of the first master device, wherein polling the first master device includes determining whether the first master device is receiving a signal from the slave device (40).

2. The method of claim 1, wherein polling (320) the first master device includes polling the first master device across a local area network.

3. The method of claim 1, wherein polling (320) the first master device includes polling the first master device with a wireless communication.

4. The method of claim 1, further comprising informing (340) the first master device of communication characteristics of the hopping sequence of the second master device.

5. The method of claim 1, further comprising transferring responsibility to provide communication between the network (60) and the slave device (40) from the second master device to the first master device.

6. The method of claim 1, wherein polling (320) the first master device includes polling a device selected from the group consisting of an access point, a base state, a network node, and a terminal.

7. The method of claim 1, further comprising determining (310) if a signal strength between the slave device (40) and the second master device is approaching a predetermined threshold.

8. The method of claim 7, further comprising transferring responsibility to provide communication between the network (60) and the slave device (40) from the second master device to the first master device.

9. The method of claim 1, wherein polling (320) the first master device includes updating a table of near neighbors.

10. The method of claim 1, further comprising changing the hopping sequence of the first master device to accord with that of the slave device (40).

11. The method of claim 1, further comprising changing the hopping sequence of the slave device (40) to accord with that of the first master device.

12. A method of transferring communication from a network (60) to a slave device (40), wherein communication between the network (60) and the slave device (40) is provided by master devices (30-33), the method **characterised by**:
notifying a first master device of the hopping sequence of the slave device (40) with a second master device; and
polling the first master device with the second master device to determine if the first master device is receiving a signal from the slave device (40).

13. The method of claim 12, wherein polling the first master device includes transmitting a packet over the network (60).

14. The method of claim 13, wherein polling the first master device includes a wireless transmission.

15. The method of claim 12, further comprising updating a table of near neighbors.

16. An article **characterised by**: a storage medium having stored thereon instructions, that, when executed by a computing platform, provide for handoff between master devices (30-33) which provide communication between a slave device (40) and a network (60), and that result in:
notifying a first master device of a hopping sequence of the slave device (40) with a second master; and
polling the first master device with the second master device to determine if the first master device is receiving a signal from the slave device (40).

17. The article of claim 16, wherein the instructions, when executed, further result in transmitting a packet over the network (60).

18. The article of claim 16, wherein the instructions, when executed, further result in determining if a signal strength between the slave device (40) and the second master device is approaching a predetermined threshold.

## Patentansprüche

1. Verfahren zum Handoff zwischen Mastergeräten (30 bis 33), welche Kommunikation zwischen einem Slavegerät (40) und einem Netzwerk (60) bereitstellen, wobei das Verfahren **gekennzeichnet ist durch**:
Polling (320) eines ersten Mastergeräts mit einem zweiten Mastergerät, um eine Sprungsequenz des ersten Mastergeräts zu bestimmen, wobei Polling des ersten Mastergeräts Bestimmen umfasst, ob das erste Mastergerät ein Signal von dem Slavegerät (40) empfängt.

2. Verfahren nach Anspruch 1, wobei Polling (320) des ersten Mastergeräts Polling des ersten Mastergeräts über ein lokales Netzwerk umfasst.

3. Verfahren nach Anspruch 1, wobei Polling (320) des ersten Mastergeräts Polling des ersten Mastergeräts mit einer Funkkommunikation umfasst.

4. Verfahren nach Anspruch 1, ferner umfassend Informieren (340) des ersten Mastergeräts über Kommunikationskenndaten der Sprungsequenz des zweiten Mastergeräts.

5. Verfahren nach Anspruch 1, ferner umfassend Übergeben von Zuständigkeit, um Kommunikation zwischen dem Netzwerk (60) und dem Slavegerät (40) bereitzustellen, von dem zweiten Mastergerät an das erste Mastergerät.

6. Verfahren nach Anspruch 1, wobei Polling (320) des ersten Mastergeräts Polling eines Geräts umfasst, das aus der Gruppe bestehend aus einem Access Point, einer Basisstation, einem Netzwerkknoten und einem Endgerät ausgewählt wird.

7. Verfahren nach Anspruch 1, ferner umfassend Bestimmen (310), ob sich eine Signalstärke zwischen dem Slavegerät (40) und dem zweiten Mastergerät einer vorbestimmten Schwelle nähert.

8. Verfahren nach Anspruch 7, ferner umfassend Übergeben von Zuständigkeit, um Kommunikation zwischen dem Netzwerk (60) und dem Slavegerät (40) bereitzustellen, von dem zweiten Mastergerät an das erste Mastergerät.

9. Verfahren nach Anspruch 1, wobei Polling (320) des ersten Mastergeräts Aktualisieren einer Tabelle naher Nachbarn umfasst.

10. Verfahren nach Anspruch 1, ferner umfassend Ändern der Sprungsequenz des ersten Mastergeräts, zum Abstimmen mit jener des Slavegeräts (40).

11. Verfahren nach Anspruch 1, ferner umfassend Ändern der Sprungsequenz des Slavegeräts (40), zum Abstimmen mit jener des ersten Mastergeräts.

12. Verfahren zum Übergeben von Kommunikation von einem Netzwerk (60) zu einem Slavegerät (40), wobei Kommunikation zwischen dem Netzwerk (60) und dem Slavegerät (40) durch Mastergeräte (30 bis 33) bereitgestellt wird, wobei das Verfahren **gekennzeichnet ist durch**:
Benachrichtigen eines ersten Mastergeräts über die Sprungsequenz des Slavegeräts (40) mit einem zweiten Mastergerät; und
Polling des ersten Mastergeräts mit dem zweiten Mastergerät, um zu bestimmen, ob das erste Mastergerät ein Signal von dem Slavegerät (40) empfängt.

13. Verfahren nach Anspruch 12, wobei Polling des ersten Mastergeräts Senden eines Pakets über das Netzwerk (60) umfasst.

14. Verfahren nach Anspruch 13, wobei Polling des ersten Mastergeräts eine Funkübertragung umfasst.

15. Verfahren nach Anspruch 12, ferner umfassend Aktualisieren einer Tabelle naher Nachbarn.

16. Gegenstand, **gekennzeichnet durch**: ein Speichermedium, welches darauf gespeicherte Anweisungen aufweist, die, wenn sie von einer Rechenplattform ausgeführt werden, für Handoff zwischen Mastergeräten (30 bis 33) sorgen, welche Kommunikation zwischen einem Slavegerät (40) und einem Netzwerk (60) bereitstellen, und die ergeben:
Benachrichtigen eines ersten Mastergeräts über eine Sprungsequenz des Slavegeräts (40) mit einem zweiten Master; und
Polling des ersten Mastergeräts mit dem zweiten Mastergerät, um zu bestimmen, ob das erste Mastergerät ein Signal von dem Slavegerät (40) empfängt.

17. Gegenstand nach Anspruch 16, wobei die Anweisungen, wenn sie ausgeführt werden, ferner Senden eines Pakets über das Netzwerk (60) ergeben.

18. Gegenstand nach Anspruch 16, wobei die Anweisungen, wenn sie ausgeführt werden, ferner Bestimmen ergeben, ob sich eine Signalstärke zwischen dem Slavegerät (40) und dem zweiten Mastergerät einer vorbestimmten Schwelle nähert.

## Revendications

1. Procédé de transfert entre des dispositifs maîtres (30-33) qui assurent une communication entre un dispositif esclave (40) et un réseau (60), le procédé étant **caractérisé par** l'étape suivante :
interroger (320) un premier dispositif maître avec un deuxième dispositif maître pour déterminer une séquence de saut du premier dispositif maître, dans lequel l'interrogation du premier dispositif maître comprend l'étape consistant à déterminer si le premier dispositif maître reçoit un signal du dispositif esclave (40).

2. Procédé selon la revendication 1, dans lequel l'interrogation (320) du premier dispositif maître comprend l'étape consistant à interroger le premier dispositif maître à travers un réseau local.

3. Procédé selon la revendication 1, dans lequel l'interrogation (320) du premier dispositif maître comprend l'étape consistant à interroger le premier dispositif maître avec une communication sans fil.

4. Procédé selon la revendication 1, comprenant en outre l'étape suivante : informer (340) le premier dispositif maître des caractéristiques de communication de la séquence de saut du deuxième dispositif maître.

5. Procédé selon la revendication 1, comprenant en outre l'étape suivante : transférer la responsabilité d'assurer une communication entre le réseau (60) et le dispositif esclave (40) du deuxième dispositif maître au premier dispositif maître.

6. Procédé selon la revendication 1, dans lequel l'interrogation (320) du premier dispositif maître comprend l'étape consistant à interroger un dispositif sélectionné dans le groupe se composant d'un point d'accès, d'un état de base, d'un noeud de réseau et d'un terminal.

7. Procédé selon la revendication 1, comprenant en outre l'étape consistant à déterminer (310) si une force de signal entre le dispositif esclave (40) et le deuxième dispositif maître s'approche d'un seuil prédéterminé.

8. Procédé selon la revendication 7, comprenant en outre l'étape consistant à transférer la responsabilité d'assurer une communication entre le réseau (60) et le dispositif esclave (40) du deuxième dispositif maître au premier dispositif maître.

9. Procédé selon la revendication 1, dans lequel l'interrogation (320) du premier dispositif maître comprend l'étape consistant à actualiser un tableau de voisins proches.

10. Procédé selon la revendication 1, comprenant en outre l'étape consistant à changer la séquence de saut du premier dispositif maître pour qu'elle s'accorde avec celle du dispositif esclave (40).

11. Procédé selon la revendication 1, comprenant en outre l'étape consistant à changer la séquence de saut du dispositif esclave (40) pour qu'elle s'accorde avec celle du premier dispositif maître.

12. Procédé de transfert d'une communication d'un réseau (60) à un dispositif esclave (40), dans lequel la communication entre le réseau (60) et le dispositif esclave (40) est assurée par des dispositifs maîtres (30-33), le procédé étant **caractérisé par** les étapes suivantes :
notifier à un premier dispositif maître la séquence de saut du dispositif esclave (40) avec un deuxième dispositif maître ; et
interroger le premier dispositif maître avec le deuxième dispositif maître pour déterminer si le premier dispositif maître reçoit un signal du dispositif esclave (40).

13. Procédé selon la revendication 12, dans lequel l'interrogation du premier dispositif maître comprend l'étape consistant à transmettre un paquet sur le réseau (60).

14. Procédé selon la revendication 13, dans lequel l'interrogation du premier dispositif maître comprend une transmission sans fil.

15. Procédé selon la revendication 12, comprenant en outre l'étape consistant à actualiser un tableau de voisins proches.

16. Article **caractérisé par** : un support de stockage sur lequel sont stockées des instructions qui, lorsqu'elles sont exécutées par une plate-forme informatique, effectuent un transfert entre des dispositifs maîtres (30-33) qui assurent une communication entre un dispositif esclave (40) et un réseau (60), et qui engendrent :
la notification à un premier dispositif maître d'une séquence de saut du dispositif esclave (40) avec un deuxième dispositif maître ; et
l'interrogation du premier dispositif maître avec le deuxième dispositif maître pour déterminer si le premier dispositif maître reçoit un signal du dispositif esclave (40).

17. Article selon la revendication 16, dans lequel les instructions, lorsqu'elles sont exécutées, engendrent en outre la transmission d'un paquet sur le réseau (60).

18. Article selon la revendication 16, dans lequel les instructions, lorsqu'elles sont exécutées, engendrent en outre la détermination si une force de signal entre le dispositif esclave (40) et le deuxième dispositif maître s'approche d'un seuil prédéterminé.
